# EUROPEAN PATENT APPLICATION

(11) **EP 4 700 902 A1**
(43) Date of publication of application: **25.02.2026**
(21) Application number: 24892486.2
(22) Date of filing: 27.11.2024
(51) Int. Cl.: H01M 10/48, H01M 50/204, H01M 50/244, H01M 50/569, H01M 50/507

(54) **BATTERY PACK AND ELECTRIC DEVICE**

(30) Priority: 10.07.2024 CN 202421620311 U
(71) Applicant: Contemporary Amperex Technology Co., Limited, Jiaocheng District Ningde Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); ZHENG, Zhimin, Ningde, Fujian 352100 (CN); WANG, Lei, Ningde, Fujian 352100 (CN); CHENG, Yong, Ningde, Fujian 352100 (CN)
(74) Representative: Kraus & Lederer PartGmbB
(86) International application number: PCT/CN2024/134871
(87) International publication number: WO 2026/011651

(57) **Abstract**

Embodiments of the present disclosure provide a battery pack and an electrical apparatus. The battery pack includes a box, a battery unit, a busbar device, and multiple temperature measurement devices. At least one battery unit is located in the box, the battery unit includes at least two battery cells, a busbar device is provided between every two adjacent battery cells of the corresponding battery unit, the busbar device is electrically connected to terminal posts of the corresponding two adjacent battery cells respectively, the multiple temperature measurement devices are located in the box, and a number of the temperature measurement devices is no less than 1/2 of the number of the battery cells and no more than 2/3 of the number of the battery cells.

## Description

### CROSS-REFERENCE TO RELATED APPLICATION

The present disclosure is proposed based on Chinese Patent Application No. 202421620311.3 filed on July 10, 2024 and entitled "BATTERY PACK AND ELECTRICAL APPARATUS", and claims priority to this Chinese Patent Application, which is incorporated here in the present disclosure by reference in its entirety.

### TECHNICAL FIELD

The present disclosure relates to the technical field of batteries, and more particularly to a battery pack and an electrical apparatus.

### BACKGROUND

Temperature is an important control parameter of a battery during operation, which directly affects battery safety, battery charge and discharge strategies, and the like. Therefore, temperature sampling plays an important role in determining whether the battery can operate normally.

In the related art, temperature sampling is generally carried out using a temperature sensor represented by a negative temperature coefficient thermistor. The temperature sensor is arranged at temperature measurement points in the battery pack. The temperature measurement points are usually arranged in one-to-one correspondence with the battery cells in the battery pack. This temperature measurement method leads to increased cost of the battery pack.

### SUMMARY OF THE INVENTION

In view of this, embodiments of the present disclosure are intended to provide a battery pack and an electrical device, aiming to reduce the cost of the battery pack.

In order to achieve the above objective, technical solutions in the embodiments of the present disclosure are implemented as follows.

A first aspect of the embodiments of the present disclosure provides a battery pack, including: a box; at least one battery unit located in the box, the battery unit including at least two battery cells, the at least two battery cells of the battery unit arranged in a first direction, the battery cell including a shell, an electrode assembly located in the shell, and a terminal post arranged on the shell, and the terminal post electrically connected to the electrode assembly; a busbar device provided between every two adjacent battery cells of the battery unit, the busbar device electrically connected to the terminal posts of the corresponding two adjacent battery cells respectively; and multiple temperature measurement devices located in the box, a number of the temperature measurement devices being no less than 1/2 of a number of the battery cells and no more than 2/3 of the number of the battery cells.

In this embodiment, the number of the temperature measurement devices is less than the number of the battery cells. That is, the temperature measurement devices are not arranged in one-to-one correspondence with the battery cells, but rather some battery cells share one temperature measurement device. The expression of sharing a temperature measurement device here specifically means that only one temperature measurement device is provided in the area corresponding to some battery cells in the box.

In this embodiment, both the accuracy and the cost of temperature measurement can be taken into account. Specifically, when the number of the temperature measurement devices is no less than 1/2 of the number of the battery cells, it is possible to arrange at least one temperature measurement device in the area where every two adjacent battery cells are located, so as to avoid the situation where temperature data is missing in a large area (e.g., no temperature measurement device in the area where more than three adjacent battery cells are located), thereby taking into account the accuracy of temperature measurement as well.

In some embodiments, the temperature measurement device is in contact with the shell of the corresponding battery cell, or alternatively, the temperature measurement device is in contact with at least one of the terminal post of the corresponding battery cell and a busbar device electrically connected to the terminal post.

Temperature measurement by the temperature measurement device in the configuration above has higher accuracy. That is, the accuracy of temperature measurement by a single temperature measurement device can be improved, thus compensating to a certain extent for the decreased accuracy of temperature measurement caused by the reduced number of the temperature measurement devices.

Specifically, when the temperature measurement device is in contact with the shell of the battery cell, the measured temperature is the temperature of the shell of the battery cell. When the temperature measurement device is in contact with at least one of the terminal post of the battery cell and the busbar assembly electrically connected to the terminal post, the measured temperature is the temperature of the charged part in the battery pack. In general, the temperature of the shell of the battery cell can relatively accurately reflect the operating status of the specific battery cell, while the temperature of the charged part can reflect to a certain extent the impact of the thermal effect of the current on the battery cell. Therefore, the above two configurations of the temperature measurement device each have their own advantages.

In some embodiments, one of the shell and the terminal post of one of every two adjacent battery cells and the busbar device electrically connected to the terminal post is selected to be in contact with the temperature measurement device.

In this embodiment, a temperature measurement device is correspondingly provided for one of every two adjacent battery cells, and only one temperature measurement device is correspondingly provided for this battery cell. In this way, while the number of the temperature measurement devices is reduced, the temperature measurement devices can be relatively evenly distributed at different positions of the box, so that the temperature measurement devices can acquire the temperature data of the battery cells more comprehensively, thereby taking both the accuracy and the cost of temperature measurement into account.

In some embodiments, the shell includes: a metal case, the electrode assembly located in the metal case, and the terminal post arranged on the metal case; and an insulating film covering an outer side of the metal case, an avoidance opening formed in the insulating film, the metal case partially exposed from the avoidance opening, and the corresponding temperature measurement device at least partially located in the avoidance opening to be in contact with the metal case.

It can be understood that the metal case facilitates reducing the possibility of problems such as short circuit, combustion, explosion, and the like, in the battery cell. The metal case may be specifically made of a metal material such as stainless steel, aluminum alloy, and the like. Since the shells of two adjacent battery cells may come into contact, the insulating film is wrapped around the outer side of the metal case.

The provision of the insulating film may have a certain impact on the conduction of heat. In this embodiment, however, an avoidance opening is provided in the insulating film, so that the temperature measurement device can be protected from the impact of the insulating film, thereby improving the accuracy of its temperature measurement of the shell of the battery cell.

In some embodiments, the metal case includes: a main casing; and an end cover covering the main casing, the electrode assembly located in a space enclosed by the end cover and the main casing, the terminal post arranged on the end cover, the insulating film arranged across the main casing and the end cover, the avoidance opening located on the side of the end cover away from the main casing, and the corresponding temperature measurement device in contact with the end cover.

In this embodiment, the temperature measurement device is in contact with the end cover instead of the main casing. In this way, the gap between the main casings of two adjacent battery cells can be reduced, and it is not necessary to reserve space for installation of the temperature measurement device, thereby allowing more compact arrangement of the battery cells and improving the energy density of the battery pack. In addition, electrical connection between the temperature measurement device and the external control system is also facilitated.

In some embodiments, the busbar device includes: a busbar body electrically connected to the terminal posts of the corresponding two adjacent battery cells respectively; and a voltage sampler electrically connected to the busbar body, the corresponding temperature measurement device in contact with the voltage sampler.

It can be understood that the busbar device needs to be electrically connected to the terminal post of the corresponding battery cell, resulting in a certain degree of occlusion of the terminal post. In view of this, in this embodiment, the temperature measurement device is in contact with the busbar device, thereby reducing the difficulty of arrangement of the temperature measurement device and facilitating the electrical connection between the temperature measurement device and the external control system.

In some embodiments, the busbar body has an avoidance notch on one side along the first direction, the voltage sampler is connected to the other side of the busbar body along the first direction, and the corresponding temperature measurement device is at least partially located in the avoidance notch to be arranged in contact with the shell of the corresponding battery cell.

In some embodiments, the battery pack includes at least one circuit board corresponding to at least one battery unit, the circuit board extends along the first direction and is arranged on one side of the busbar device along a second direction, the second direction intersecting the first direction; the avoidance notch is located on the side of the busbar body close to the circuit board, and the temperature measurement device and the voltage sampler are both electrically connected to the circuit board.

In some embodiments, at least one temperature measurement device is a first temperature measurement device in contact with the shell of the corresponding battery cell, and at least one temperature measurement device is a second temperature measurement device in contact with at least one of the terminal post of the corresponding battery cell and the busbar device electrically connected to the terminal post.

At least one first temperature measurement device and at least one second temperature measurement device are provided in the battery pack of this embodiment. In this way, the temperature of the shell of the battery cell and the temperature of the charged part of the battery pack can be provided at the same time, thereby improving the accuracy of determination of the operating status of the battery cell, and consequently improving the charging and discharging performance and usage reliability of the battery pack.

In some embodiments, the busbar device connects the corresponding two adjacent battery cells in series; and/or the battery pack includes at least two battery units and a jumper device, the jumper device provided between every two adjacent battery units, and the jumper device connecting the corresponding two adjacent battery units in series.

In this embodiment, the battery cells are connected in series, and/or the battery units are connected in series, so that the battery pack can meet the supply voltage requirements, and the charge and discharge rate of the battery pack can be improved to a certain extent.

A second aspect of the embodiments of the present disclosure provides an electrical apparatus including the battery pack of the first aspect of the embodiments of the present disclosure.

The electrical apparatus of the second aspect of the embodiments of the present disclosure has all the advantages of the battery pack of the first aspect of the embodiments of the present disclosure, which will not be descried in detail again here.

### BRIEF DESCRIPTION OF DRAWINGS

FIG. 1 is a schematic structural view of a battery pack in accordance with an embodiment of the present disclosure;
FIG. 2 is a schematic structural view of a box and a battery unit in accordance with an embodiment of the present disclosure;
FIG. 3 is a schematic structural view of a battery cell in accordance with an embodiment of the present disclosure;
FIG. 4 is a schematic structural top view of a busbar device, a flexible circuit board, and a temperature measurement device in accordance with an embodiment of the present disclosure;
FIG. 5 is a schematic structural bottom view of a busbar device, a flexible circuit board, and a temperature measurement device in accordance with an embodiment of the present disclosure;
FIG. 6 is a schematic structural view of a busbar device in accordance with an embodiment of the present disclosure;
FIG. 7 is a schematic enlarged view of part A in FIG. 4;
FIG. 8 is a schematic structural view of a bracket in accordance with an embodiment of the present disclosure; and
FIG. 9 is a schematic view of connection positions of a temperature measurement device, a voltage sampler, and a circuit board in accordance with an embodiment of the present disclosure.

### Description of reference numerals

Box; 2. Battery unit; 21. Battery cell; 211. Shell; 2111. Metal case; 2111a. Main casing; 2111b. End cover; 2112. Insulating film; 2112a. Avoidance opening; 212. Terminal post; 2121. Positive terminal post; 2122. Negative terminal post; 213. Explosion-proof valve; 3. Busbar device; 31. Busbar body; 31a. Avoidance notch; 32. Voltage sampler; 4. Temperature measurement device; 41. First temperature measurement device; 42. Second temperature measurement device; 5. Circuit board; 51. Connector; 6. Jumper device; 7. Bracket; 7a. Hollow portion.

### DETAILED DESCRIPTION

In order to make the objects, technical solutions, and advantages of the present disclosure clearer, the present disclosure will be described in further detail below in conjunction with the drawings and embodiments. It should be understood that the specific embodiments described herein are intended only to explain the present disclosure and not to limit the present disclosure.

Unless otherwise defined, all technical and scientific terms used herein have the same meaning as commonly understood by those skilled in the art belonging to the present disclosure. The terms used herein are only for the purpose of describing specific embodiments and are not intended to limit the present disclosure. The terms "including" and "having" and any variants thereof in the present disclosure are intended to cover non-exclusive inclusion.

In the description of the embodiments of the present disclosure, the technical terms "first," "second," "third," and the like are used only to distinguish between different objects, and are not to be understood as indicating or implying a relative importance or implicitly specifying the number, particular order, or primary and secondary relation of the technical features indicated. In the description of the embodiments of the present disclosure, "a plurality of" means two or more, unless otherwise explicitly and specifically defined.

The reference to "embodiments" herein means that specific features, structures or characteristics described in combination with the embodiments may be included in at least one embodiment of the present disclosure. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an associative relationship for describing associated objects, indicating that three relationships may exist. For example, D and/or F may indicate three situations: D exists alone, both D and F exist, and F exists alone. In addition, the character "/" herein generally indicates that the associated objects before and after it are in an "or" relationship.

In the description of the embodiments of the present disclosure, the technical terms "length," "width," "thickness," "upper," "lower," "front," "rear," "left," "right," "vertical," "horizontal," "top," "bottom," "inner," "outer," "circumferential," and the like indicate orientations or positional relationships based on the orientations or positional relationships shown in the drawings, and are intended only to facilitate and simplify the description of the embodiments of the present disclosure, and are not intended to indicate or imply that a device or element referred to must have a particular orientation, be constructed, operated and used in a particular orientation, and therefore should not be construed as limiting the embodiments of the present disclosure.

In the description of the embodiments of the present disclosure, unless otherwise expressly specified and defined, the technical terms "mounted," "linked," "connected," "fixed," and the like are to be understood broadly, and may, for example, be fixedly connected or detachably connected, or integrated; and may also be mechanically connected or electrically connected; and may be directly linked or indirectly linked through an intermediate medium, and may be internal communication or interaction between two elements. For those of ordinary skill in the art, the specific meanings of the above terms in the embodiments of the present disclosure can be understood according to specific situations.

In the description of the embodiments of the present disclosure, unless otherwise explicitly specified and defined, the technical term "contact" should be understood in a broad sense, which may be direct contact, or contact through an intermediate layer, or contact between two objects with little or no mutual interaction force, or contact between two objects with mutual interaction force.

In the description of the present disclosure, orientations or positional relationships such as "first direction," "second direction," "third direction," "height direction," and the like are based on the orientations or positional relationships shown in the drawings, where the "first direction" is the direction indicated by the arrow L1 in the drawings, the "second direction" is the direction indicated by the arrow L2 in the drawings, and the "third direction" is the direction indicated by the arrow L3 in the drawings. It is to be understood that these orientation terms are intended only for facilitating the description of the present disclosure and simplifying the description, rather than indicating or implying that the apparatus or element referred to must have a particular orientation or be constructed and operated in a particular orientation, and therefore shall not be interpreted as limiting the present disclosure.

With the country's vigorous promotion of new energy vehicles, new energy vehicles have ushered in a golden opportunity for development. The reliability and stability of vehicles have always been people's greatest concern. Therefore, improving the reliability of new energy vehicles will be one of the important factors that determine whether new energy vehicles can be quickly popularized. Battery units are the main components of the battery pack of new energy vehicles. Improving the reliability of battery units is an important way to improve the reliability of new energy vehicles.

A battery unit usually includes multiple battery cells, which are confined in a frame formed by welding end plates and side plates. During the assembly process of the battery unit, the end plates at both ends have a certain pre-tightening force on the battery to enhance and improve the cycle performance of the battery.

The battery cell includes a shell, an electrode assembly arranged in the shell, and a terminal post arranged on the shell, the terminal post being electrically connected to the electrode assembly. The electrode assembly is formed by a positive electrode plate, a negative electrode plate, and a separator. The terminal post includes a positive terminal post and a negative terminal post, which are electrically connected to the positive electrode plate and the negative electrode plate respectively.

The operation of the battery cell mainly relies on the movement of metal ions between the positive electrode plate and the negative electrode plate. The positive electrode plate includes a positive electrode current collector and a positive electrode active material layer. A surface of the positive electrode current collector is coated with the positive electrode active material layer. The parts, not coated with the positive electrode active material layer, of the current collector protrude from the parts, coated with the positive electrode active material layer, of the current collector, and the parts, not coated with the positive electrode active material layer, of the current collector are stacked and serve as positive tabs. Taking a lithium-ion battery as an example, the material of the positive electrode current collector may be aluminum, and the positive electrode active material may be lithium cobalt oxide, lithium iron phosphate, ternary lithium, lithium manganate, or the like. The negative electrode plate includes a negative electrode current collector and a negative electrode active material layer. A surface of the negative electrode current collector is coated with the negative electrode active material layer. The parts, not coated with the negative electrode active material layer, of the current collector protrude from the parts, coated with the negative electrode active material layer, of the current collector, and the parts, not coated with the negative electrode active material layer, of the current collector are stacked and serve as negative tabs. The material of the negative electrode current collector may be copper, and the negative electrode active material may be carbon, silicon, or the like. The separator may be made of a material such as polypropylene (PP), polyethylene (PE), or the like. In addition, the electrode assembly may be of a wound structure or a laminated structure.

The battery pack is also provided with a Cells Contact System (CCS), which is mainly formed by a Flexible Printed Circuit (FPC), a busbar device (e.g., copper-aluminum busbar, etc.), a voltage sampler, a temperature measurement device, and the like. The busbar device, the voltage sampler, and the temperature measurement device are all connected to the flexible printed circuit.

The busbar device is electrically connected to the terminal posts of two connected battery cells respectively, so as to connect the two adjacent battery cells in series or in parallel.

The voltage sampler generally includes a nickel sheet, which is in contact with the busbar device and/or the terminal post of the battery cell and is electrically connected to the flexible printed circuit, thereby jointly accomplishing voltage collection.

The temperature measurement device includes a temperature sensor represented by a Negative Temperature Coefficient thermistor (NTC), which is arranged at a sampling point in the battery pack.

In the related art, the temperature measurement devices are usually arranged in one-to-one correspondence with the battery cells. However, with the advancement of technology, the number of battery cells in a battery pack is increasing, and the arrangement is becoming more and more compact. For example, there is a type of battery pack that has a great charge and discharge rate. Specifically, the ratio between the energy value and the power value of the battery pack is less than or equal to 1/3. In this case, continuing to use the above-mentioned configuration of the temperature measurement device leads to a high cost.

In view of this, a battery pack according to embodiments of the present disclosure is proposed. The battery pack of the embodiments of the present disclosure includes: a box, at least one battery unit, a busbar device, and multiple temperature measurement devices. The at least one battery unit is located in the box, the battery unit includes at least two battery cells, the at least two battery cells of the battery unit are arranged in a first direction, the battery cell includes a shell, an electrode assembly located in the shell, and a terminal post arranged on the shell, and the terminal post is electrically connected to the electrode assembly. A busbar device is provided between every two adjacent battery cells of a corresponding battery unit, and the busbar device is electrically connected to the terminal posts of the corresponding two adjacent battery cells respectively. Multiple temperature measurement devices are provided in the box, and the number of the temperature measurement devices is less than the number of the battery cells.

In this embodiment, the number of the temperature measurement devices is less than the number of the battery cells. That is, the temperature measurement devices are not arranged in one-to-one correspondence with the battery cells, and at least some of the battery cells share a temperature measurement device, so that the cost of the battery pack can be reduced.

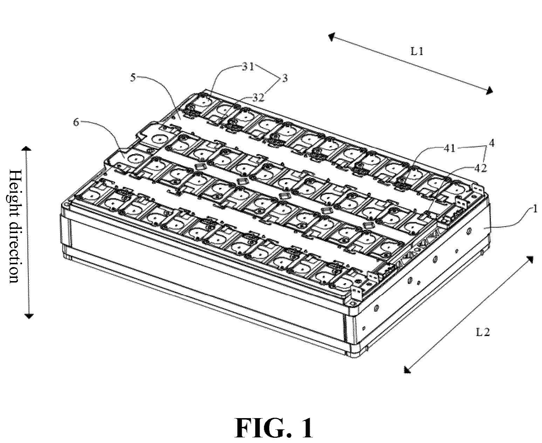

According to some embodiments of the present disclosure, with reference to FIGS. 1 to 5, a battery pack includes a box 1, at least one battery unit 2, a busbar device 3, and multiple temperature measurement devices 4. The at least one battery unit 2 is located in the box 1, the battery unit 2 includes at least two battery cells 21, the at least two battery cells 21 of the battery unit 2 are arranged in a first direction, the battery cell 21 includes a shell 211, an electrode assembly (not shown) located in the shell 211, and a terminal post 212 arranged on the shell 211, and the terminal post 212 is electrically connected to the electrode assembly. A busbar device 3 is provided between every two adjacent battery cells 21 of a corresponding battery unit 2, and the busbar device 3 is electrically connected to the terminal posts 212 of the corresponding two adjacent battery cells 21 respectively. The multiple temperature measurement devices 4 are located in the box 1, and the number of the temperature measurement devices 4 is less than the number of the battery cells 21.

The specific structure of the box 1 is not limited. As an example, referring to FIG. 1, the box 1 of the battery pack may be substantially of a rectangular parallelepiped shape.

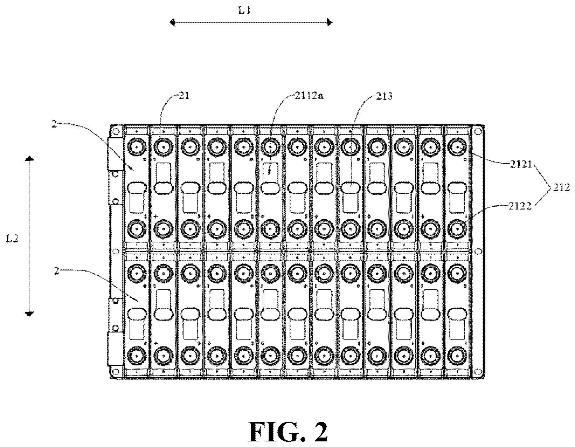

At least one battery cell 21 is arranged in the box 1. Referring to FIG. 2, each battery unit 2 includes at least two battery cells 21. The at least two battery cells 21 are arranged in a first direction, which may specifically be a length direction or a width direction of the box 1.

The battery pack may include only one battery unit 2 or may include two or more battery units 2. In the case where the battery pack includes at least two battery units 2, the at least two battery units 2 are arranged along a second direction.

The second direction intersects the first direction. As an example, the second direction may be orthogonal to the first direction. For example, the first direction is the length direction of the box 1 and the second direction is the width direction of the box 1. Alternatively, the second direction may be at any suitable angle with respect to the first direction.

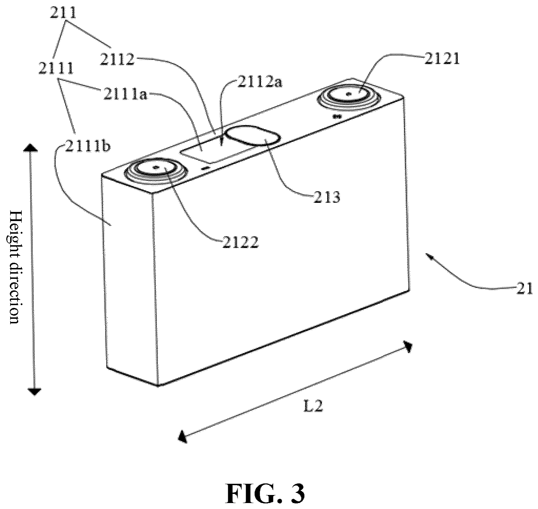

Referring to FIG. 3, the battery cell 21 includes a shell 211, an electrode assembly located in the shell 211, and a terminal post 212 arranged on the shell 211. As an example, the electrode assembly includes a positive electrode plate and a negative electrode plate, the terminal post 212 includes a positive terminal post 2121 and a negative terminal post 2122, and the positive terminal post 2121 and the negative terminal post 2122 are connected to the positive electrode plate and the negative electrode plate respectively. The positive terminal post 2121 and the negative terminal post 2122 of the same battery cell 21 may be spaced apart along the second direction.

Referring to FIGS. 2, 4, and 5, the busbar device 3 is provided between every two adjacent battery cells 21 in the battery unit 2, and the busbar device 3 is electrically connected to the terminal posts 212 of the corresponding two adjacent battery cells 21 respectively.

The busbar device 3 may be an aluminum busbar, a copper-aluminum busbar, or other devices with an electrically conductive function, which is not limited. The busbar device 3 may be substantially of a plate-shaped structure and located on a top side of the corresponding battery cell 21.

The busbar device 3 is provided between every two adjacent battery cells 21 of the battery unit 2. The busbar device 3 may connect the two adjacent battery cells 21 in parallel or in series, which is not limited. Taking a battery pack applied for powering a vehicle as an example, the battery pack needs to have a sufficiently high operating voltage, so the busbar device 3 usually connects two adjacent battery cells 21 in series.

Taking a busbar device 3 connecting two adjacent battery cells 21 in series as an example, the busbar device 3 may be electrically connected to the positive terminal post 2121 of one of the battery cells 21, and electrically connected to the negative terminal post 2122 of the other one of the battery cells 21.

As mentioned above, in some embodiments, the battery pack may include at least two battery units 2, and the at least two battery units 2 may be connected in series and arranged along the second direction. In these embodiments, the battery pack includes a jumper device 6. The jumper device 6 is provided between every two adjacent battery units 2. The jumper device 6 may connect the two battery units 2 in series or in parallel. Still taking the battery pack applied for powering a vehicle as an example, the jumper device 6 may connect the two battery units 2 in series.

Specifically, the jumper device 6 may be connected to the battery cell 21 at the end on one side of one of the battery units 2 along the first direction and the battery cell 21 at this end of the other one of the battery units 2 respectively, so as to connect the two battery units 2 in series or in parallel. The specific structure of the jumper device 6 can be known with reference to the busbar device 3, and will not be described in detail again here.

The temperature measurement device 4 may include a temperature measurement sensor represented by a negative temperature coefficient thermistor. There are multiple temperature measurement devices 4, which are distributed at different positions of the battery pack. During actual operation, the operating status of the battery cells 21 can be evaluated comprehensively based on the temperatures measured by the multiple temperature measurement devices 4.

The temperature measurement devices 4 may output the measured temperature data to an external control system, which can determine the operating status of the battery cells 21 in the battery pack based on the temperature data measured by the temperature measurement devices 4, and then adjust the charge and discharge strategy and the like for the battery pack.

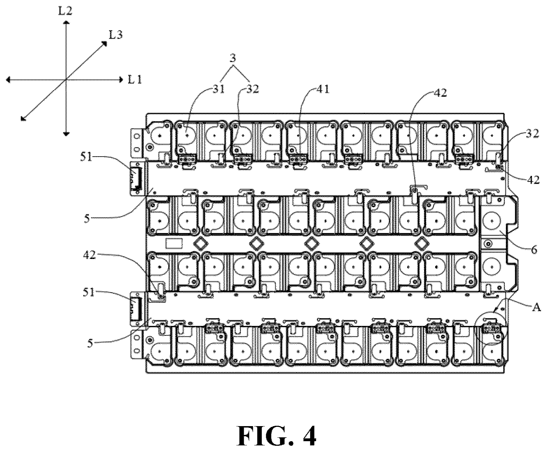

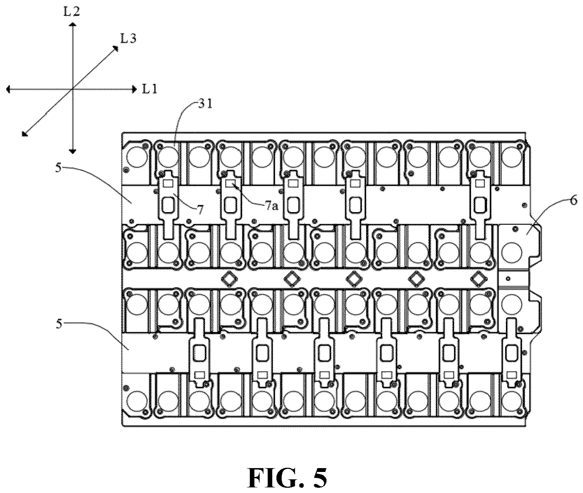

As an example, referring to FIGS. 4 and 5, the battery pack may include a circuit board 5, and the temperature measurement devices may be electrically connected to the circuit board 5. The circuit board 5 may be a Flexible Printed Circuit (FPC) or other types of circuit boards, which is not limited. The circuit board 5 may be provided with a connector 51 for connection with an external control system, so as to transmit the temperature measurement devices 4 and the measured temperature data to the external control system.

More specifically, a circuit board 5 may be correspondingly provided for each battery unit 2, and the circuit board 5 may be located on the top side of the battery cells 21 of the corresponding battery unit 2 and extend along the first direction. The positive terminal post 2121 and the negative terminal post 2122 of the battery cell 21 are arranged along the second direction, a gap may be formed between the busbar devices 3 corresponding to the positive terminal post 2121 and the negative terminal post 2122 of the same battery cell 21, the circuit board 5 may be arranged in the gap, and the opposite sides of the circuit board 5 along the second direction may be connected to the corresponding busbar devices 3. That is, the circuit board 5 extends along the first direction and is arranged on one side of the busbar devices 3 along the second direction (or in other words, the individual busbar devices 3 are arranged on opposite sides of the circuit board 5 along the second direction respectively).

It is to be noted that the battery pack may alternatively not include the circuit board 5, and the temperature measurement device 4 may alternatively be connected to the external control system by other means, such as through a wire or the like.

In this embodiment, the number of the temperature measurement devices 4 is less than the number of the battery cells 21. That is, the temperature measurement devices 4 are not arranged in one-to-one correspondence with the battery cells 21, but rather some battery cells 21 share one temperature measurement device 4. The expression that some battery cells 21 share a temperature measurement device 4 here specifically means that only one temperature measurement device is provided in the area corresponding to some battery cells 21 in the box 1. In this way, the cost of the battery pack can be reduced.

It is to be noted that the number of the battery cells 21 here refers to the total number of battery cells 21 in the battery pack, rather than the number of the battery cells 21 in a certain battery unit 2. In some embodiments below, the temperature measurement devices 4 may include a first temperature measurement device 41 and a second temperature measurement device 42, where the number of the temperature measurement devices is the total number of the first temperature measurement devices 41 and the second temperature measurement devices 42.

Specifically, in this embodiment, the number of the temperature measurement devices 4 is no less than 1/2 of the number of the battery cells 21 and no more than 2/3 of the number of the battery cells 21, and the numerical range here includes the endpoint values.

In this embodiment, both the accuracy and the cost of temperature measurement can be taken into account. Specifically, when the number of the temperature measurement devices 4 is no less than 1/2 of the number of the battery cells 21, it is possible to arrange at least one temperature measurement device 4 in the area where every two adjacent battery cells 21 are located, so as to avoid the situation where temperature data is missing in a large area (e.g., no temperature measurement device 4 in the area where more than three adjacent battery cells 21 are located), thereby taking into account the accuracy of temperature measurement as well.

In some embodiments, the temperature measurement device 4 is in contact with the shell 211 of the corresponding battery cell 21, or alternatively, the temperature measurement device is in contact with at least one of the terminal post 212 of the corresponding battery cell 21 and the busbar device 3 electrically connected to the terminal post 212.

Temperature measurement by the temperature measurement device 4 in the configuration above has higher accuracy. That is, the accuracy of temperature measurement by a single temperature measurement device can be improved, thus compensating to a certain extent for the decreased accuracy of temperature measurement caused by the reduced number of the temperature measurement devices.

It is to be noted that the contact here specifically refers to contact in a manner that the temperature measurement device 4 can detect the temperature at the position within an allowable tolerance range. Taking the contact between the temperature measurement device 4 and the shell 211 of the corresponding battery cell 21 as an example, the temperature measurement surface of the temperature measurement device 4 may be directly in contact with the shell 211 of the battery cell 21, or it may be indirectly in contact with the shell 211 of the battery cell 21 (e.g., in contact with the shell 211 via a silicone thermal pad, a thermally conductive adhesive, or other thermally conductive structures), provided that the difference between the temperature actually detected by the temperature measurement device 4 and the actual temperature of the shell 211 of the battery cell 21 is within the allowable range (e.g., the difference is less than 3°C, 2°C, 1°C, 0.5°C, and so forth).

When the temperature measurement device 4 is in contact with the shell 211 of the battery cell 21, the temperature measured is the temperature of the shell 211 of the battery cell 21. In some sections below, such a temperature measurement device 4 in contact with the shell 211 of the battery cell 21 is referred to as a first temperature measurement device 41.

When the temperature measurement device 4 is in contact with at least one of the terminal post 212 of the battery cell 21 and the busbar assembly electrically connected to the terminal post 212, the temperature measured is the temperature of the charged part in the battery pack. In some sections below, such a temperature measurement device 4 in contact with at least one of the terminal post 212 of the battery cell 21 and the busbar assembly electrically connected to the terminal post 212 is referred to as a second temperature measurement device 42.

In general, the temperature of the shell 211 of the battery cell 21 can relatively accurately reflect the operating status of the specific battery cell 21, while the temperature of the charged part can reflect the impact of the thermal effect of the current on the battery cell 21 to a certain extent. Therefore, the first temperature measurement device 41 and the second temperature measurement device 42 each have their own advantages.

Those skilled in the art may specifically choose to set the temperature measurement device 4 as the first temperature measurement device 41 or the second temperature measurement device 42 according to actual use requirements. For example, all the temperature measurement devices 4 may be the first temperature measurement device 41, or all the temperature measurement devices 4 may be the second temperature measurement device 42. Alternatively, some of the temperature measurement devices 4 may be the first temperature measurement device 41, and the other temperature measurement devices 4 may be the second temperature measurement device 42.

In some embodiments, one of the shell 211 and the terminal post 212 of one of every two adjacent battery cells 21 and the busbar device 3 electrically connected to the terminal post 212 is selected to be in contact with the temperature measurement device.

In this embodiment, a temperature measurement device 4 is correspondingly provided for one of every two adjacent battery cells 21, and only one temperature measurement device 4 is correspondingly provided for this battery cell 21. In this way, while the number of the temperature measurement devices 4 is reduced, the temperature measurement devices 4 can be relatively evenly distributed at different positions of the box 1, so that the temperature measurement devices 4 can acquire the temperature data of the battery cells 21 more comprehensively, thereby taking both the accuracy and the cost of temperature measurement into account.

In some embodiments, the shell 211 includes a metal case 2111 and an insulating film 2112, the electrode assembly is located in the metal case 2111, and the terminal post 212 is arranged on the metal case 2111. The insulating film 2112 is coated on an outer side of the metal case 2111. An avoidance opening 2112a is formed in the insulating film 2112. The metal case 2111 is partially exposed from the avoidance opening 2112a. The corresponding temperature measurement device is at least partially located in the avoidance opening 2112a to be in contact with the metal case 2111. As mentioned above, the temperature measurement device 4 here is the first temperature measurement device 41.

It can be understood that the metal case 2111 helps to reduce the possibility of problems such as short circuit, combustion, explosion, and the like, in the battery cell 21. The metal case 2111 may be specifically made of a metal material such as stainless steel, aluminum alloy, and the like. Since the shells 211 of two adjacent battery cells 21 may come into contact, the insulating film 2112 is wrapped around the outer side of the metal case 2111.

The provision of the insulating film 2112 may have a certain impact on the conduction of heat. In this embodiment, however, an avoidance opening 2112a is provided in the insulating film 2112, so that the first temperature measurement device 41 can be protected from the impact of the insulating film 2112, thereby improving the accuracy of its temperature measurement of the shell 211 of the battery cell 21.

In some embodiments, the battery cell 21 further includes an explosion-proof valve 213 arranged in the metal case 2111 and located in the avoidance opening 2112a. In this way, the number of the openings of the insulating film 2112 can be reduced and the insulation of the battery cell 21 can be improved. The specific structure of the explosion-proof valve 213 can be known with reference to the relevant technology in the art and will not be described in detail here.

In some embodiments, the metal case 2111 includes a main casing 2111a and an end cover 2111b covering the main casing 2111a, the electrode assembly is located in a space enclosed by the end cover 2111b and the main casing 2111a, the terminal post 212 is arranged on the end cover 2111b, the insulating film 2112 is arranged across the main casing 2111a and the end cover 2111b, the avoidance opening 2112a is located on the side of the end cover 2111b away from the main casing 2111a, and the corresponding temperature measurement device is in contact with the end cover 2111b.

In this embodiment, the first temperature measurement device 41 is in contact with the end cover 2111b instead of the main casing 2111a. In this way, the gap between the main casings 2111a of two adjacent battery cells 21 can be reduced, and it is not necessary to reserve space for installation of the first temperature measurement device 41, thereby allowing more compact arrangement of the battery cells 21 and improving the energy density of the battery pack. In addition, electrical connection between the first temperature measurement device 41 and the external control system is also facilitated.

In some embodiments, the corresponding temperature measurement device 4 is in contact with the busbar device 3.

As mentioned above, the temperature measurement device 4 here is the second temperature measurement device 42. It can be understood that the busbar device 3 needs to be electrically connected to the terminal post 212 of the corresponding battery cell 21, resulting in a certain degree of occlusion of the terminal post 212. In view of this, in this embodiment, the second temperature measurement device 42 is in contact with the busbar device 3, thereby reducing the difficulty of arrangement of the second temperature measurement device 42 and facilitating the electrical connection between the second temperature measurement device 42 and the external control system.

In some embodiments, the busbar device 3 further includes a busbar body 31 and a voltage sampler 32. The busbar body 31 is electrically connected to the terminal posts 212 of corresponding two adjacent battery cells 21. The voltage sampler 32 is electrically connected to the busbar body 31, and the corresponding temperature measurement device is in contact with the voltage sampler 32. As mentioned above, the temperature measurement device here is the second temperature measurement device 42.

In this embodiment, the second temperature measurement device 42 is in contact with the voltage sampler 32, thereby further reducing the difficulty of assembly thereof.

In this embodiment, the voltage sampler 32 may be a nickel sheet or another device with an electrically conductive function, which is mainly used to measure the voltage signal of the busbar body 31 and transmit the voltage signal to the external control system.

As an example, the second temperature measurement device 42 may be connected to the nickel sheet by ultrasonic welding, and a thermal conductive adhesive may be applied in supplementation at the connection point. In this way, the stability of contact between the second temperature measurement device 42 and the nickel sheet can be improved, and the accuracy of temperature measurement by the second temperature measurement device 42 can be improved.

In the above-mentioned embodiment in which a circuit board 5 is provided, the voltage sampler 32 may extend along the second direction, and the voltage sampler 32 may include a first section in contact with the busbar device 3 and a second section in contact with the circuit board 5 along the second direction. The second temperature measurement device 42 may be located in the second section of the voltage sampler 32 and electrically connected to the circuit board 5. In this way, the electrical connection structure between the second temperature measurement device 42 and the circuit board 5 is further simplified, thereby further reducing the difficulty of assembly thereof. Obviously, the location where the second temperature measurement device 42 is arranged is not limited thereto, and for example, it may also be arranged in the first section of the voltage sampler 32.

It is to be noted that, regardless of whether it is necessary to be in contact with the second temperature measurement device 42, the voltage sampler 32 should be provided on the busbar device 3. In other words, each bus device 3 in the battery pack includes a busbar body 31 and a voltage sampler 32, but only some of the voltage samplers 32 may be in contact with the second temperature measurement device 42. Compared with the voltage sampler 32 not in contact with the second temperature measurement device 42, the voltage sampler 32 in contact with the second temperature measurement device 42 may have a larger surface area (such as in the above embodiment, it may have a longer length along the second direction) to provide sufficient installation space for the second temperature measurement device 42.

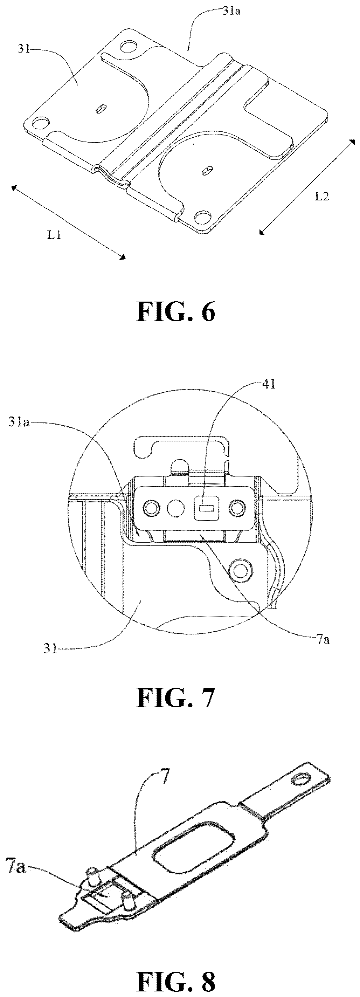

In some embodiments, with reference to FIGS. 6 and 7, the busbar body 31 may have an avoidance notch 31a on one side along the first direction, while the voltage sampler 32 is connected to the other side of the busbar body 31 along the first direction, and the corresponding temperature measurement device is at least partially located in the avoidance notch 31a to be in contact with the shell 211 of the corresponding battery cell 21. As mentioned above, the temperature measurement device here is the first temperature measurement device 41.

In this embodiment, the first temperature measurement device 41 and the voltage sampler 32 are respectively located on opposite sides of the busbar device 3 along the first direction. In this way, the overall wiring arrangement of the temperature measurement device 4 and the voltage sampler 32 is facilitated, and the interference between the wirings of the above components is reduced.

In this embodiment, the specific shape of the avoidance notch 31a is not limited. In some embodiments described above, the shell 211 of the battery cell 21 includes an insulating film 2112, and an avoidance opening 2112a is formed in the insulating film 2112. In these embodiments, the avoidance notch 31a may be formed at the position of the avoidance opening 2112a of the corresponding battery cell 21.

It is to be noted that, regardless of whether the shell 211 of the corresponding battery cell 21 is in contact with the first temperature measurement device 41, the busbar body 31 of the busbar device 3 electrically connected to the terminal post 212 of the corresponding battery cell 21 may have an avoidance notch 31a. In other words, the busbar body 31 of each busbar device 3 of the battery pack has an avoidance notch 31a, but the first temperature measurement device 41 may be provided in only some of the avoidance notches 31a.

In some embodiments, with reference to FIGS. 7 and 8, the battery pack further includes a bracket 7 arranged on the side of the busbar device 3 facing the battery cell 21 and connected to the busbar device 3. The bracket 7 has a hollow portion 7a located in the avoidance notch 31a. The first temperature measurement device 41 is fixedly connected to the bracket 7 and at least partially located in the hollow portion 7a. In this way, the installation stability of the first temperature measurement device 41 can be improved, and the possibility of displacement of the first temperature measurement device 41 during actual use can be reduced.

In this embodiment, the first temperature measurement device 41 is fixed by means of the bracket 7, so that the installation stability of the first temperature measurement device 41 can be improved. As an example, the bracket 7 may extend along the second direction, and its opposite ends along the second direction may be respectively connected to a busbar device 3, thereby further improving the installation stability of the first temperature measurement device 41.

In some embodiments, with reference to FIGS. 4, 5, and 9, the battery pack further includes at least one circuit board 5 corresponding to at least one battery unit 2, and the circuit board 5 extends along the first direction and is arranged on one side of the busbar device 3 along the second direction, the second direction intersecting the first direction. The avoidance notch 31a is located on the side of the busbar body 31 close to the circuit board 5, and the temperature measurement device and the voltage sampler 32 are both electrically connected to the circuit board 5.

In some embodiments, at least one temperature measurement device 4 is the first temperature measurement device 41 in contact with the shell 211 of the corresponding battery cell 21, and at least one temperature measurement device 4 is the second temperature measurement device 42 in contact with at least one of the terminal post 212 of the corresponding battery cell 21 and the busbar device 3 electrically connected to the terminal post 212.

As mentioned above, the first temperature measurement device 41 can measure the temperature of the shell 211 of the battery cell 21, and the second temperature measurement device 42 can measure the temperature of the charged part in the battery pack. The present disclosure has found that there is a certain difference between the temperature of the shell 211 of the battery cell 21 and the temperature of the charged part in the battery pack.

The above-mentioned temperature difference is particularly obvious in the case of a great charge and discharge rate of the battery pack. The charge and discharge rate refers to the ratio between the energy value and the power value of the battery pack. A great charge and discharge rate means that the current during the operation of the battery pack may be great (e.g., it may be greater than 150A, or greater than 300A, or greater than 400A, or even greater than 500A). The thermal effect of the current increases with the increase of the current value, thereby causing increased temperature difference between the shell 211 of the battery cell 21 and the charged part. In the case of a great charge and discharge rate of the battery pack, more specifically, in the case where the ratio of the energy value to the power value of the battery pack is less than or equal to 1/3, if only the temperature of the shell 211 of the battery cell 21 is measured, or only the temperature of the charged part of the battery pack is measured, it is difficult to accurately determine the operating status of the battery cell 21.

In view of this, at least one first temperature measurement device 41 and at least one second temperature measurement device 42 are provided in the battery pack of this embodiment. In this way, the temperature of the shell 211 of the battery cell 21 and the temperature of the charged part of the battery pack can be provided at the same time, thereby improving the accuracy of determination of the operating status of the battery cell 21, and consequently improving the charging and discharging performance and usage reliability of the battery pack.

In some embodiments, at least one second temperature measurement device 42 is located in an end area on one side of the box 1 along the first direction, at least one second temperature measurement device 42 is located in an end area on the other side of the box 1 along the first direction, and at least one second temperature measurement device 42 is located in a middle area of the box 1 along the first direction.

It can be understood that the end area is relatively close to the end wall of the box 1, and the amount of heat exchanged with the external environment is relatively great, while the amount of heat exchanged between the middle area and the external environment is relatively small. Therefore, there is a certain difference between the temperature of the charged part in the end area and the temperature of the charged part in the middle area. In this embodiment, at least one second temperature measurement device 42 is provided in each of these areas. In this way, this helps to more comprehensively measure the temperature of the charged parts at various positions of the box 1, further improve the accuracy of the determination of the operating status of the battery cell 21, and consequently improve the charging and discharging performance and reliability of the battery pack.

It is to be noted that the end area here specifically refers to the area where a battery cell 21 at the end of the battery unit 2 along the first direction is located, that is, at least one of the terminal post 212 of a battery cell 21 at the end of the battery unit 2 along the first direction and the busbar device 3 electrically connected to the terminal post 212 is in contact with the second temperature measurement device 42. The middle area refers to the area between the two end areas.

In some embodiments, the battery pack includes at least two battery units 2, which are arranged along the second direction, the second temperature measurement devices 42 are arranged along the third direction, the first direction, the second direction, and the third direction intersect each other, and the first direction, the second direction, and the third direction are all perpendicular to the height direction of the battery pack.

In this embodiment, the second temperature measurement devices 42 are distributed along the third direction intersecting both the first direction and the second direction. In this way, not only the temperatures of the charged parts in the two end areas can be measured, but also the temperatures of the charged parts in the diagonal areas on both sides can be measured, resulting in a more comprehensive measurement.

As an example, the third direction may be the diagonal direction of the box 1, or a direction close to the diagonal direction of the box 1, for example, a direction at an angle of no more than 5°, no more than 10°, or no more than 15° with respect to the diagonal line of the box 1. It is to be noted that the distribution of the second temperature measurement devices 42 along the third direction specifically means that, assuming that a coordinate system is constructed, the position coordinates of the second temperature measurement devices 42 are fitted into a virtual line, and the extension direction of the virtual line is the third direction.

In some embodiments, the busbar device 3 connects the corresponding two adjacent battery cells 21 in series. This helps to increase the operating voltage of the battery pack and improve the charge and discharge rate of the battery pack to meet related usage requirements.

In some embodiments, the battery pack includes at least two battery units 2 and a jumper device 6, the jumper device 6 is provided between every two adjacent battery units 2, and the jumper device 6 connects the corresponding two adjacent battery units 2 in series. This helps to further increase the operating voltage of the battery pack and improve the charge and discharge rate of the battery pack.

Embodiments of the present disclosure further provide an electrical apparatus including the battery pack described in any of the preceding embodiments. The electrical apparatus of the embodiments of the present disclosure has all the advantages of the battery pack described above, which will not be described in detail again here.

The battery pack in one or more of the preceding embodiments is described in more detail and more specifically below in conjunction with a specific embodiment.

Referring to FIGS. 1 to 9, the battery pack includes a box 1, two battery units 2, a busbar device 3, a circuit board 5, and multiple temperature measurement devices 4. The ratio of the energy value to the power value of the battery pack is less than or equal to 1/3.

The box 1 is substantially of a rectangular parallelepiped shape, each battery unit 2 includes multiple battery cells 21 arranged along a first direction, the two battery units 2 are arranged along a second direction, and the numbers of the battery cells 21 in the two battery units 2 are the same (in the illustrated embodiment, there are 13 battery cells 21 in each of the two battery units 2). The first direction is the length direction of the box 1, and the second direction is the width direction of the box 1.

The battery cell 21 includes a shell 211, an electrode assembly located in the shell 211, and a terminal post 212 arranged on the shell 211. The electrode assembly includes a positive electrode plate and a negative electrode plate. The terminal post 212 includes a positive terminal post 2121 and a negative terminal post 2122. The positive terminal post 2121 and the negative terminal post 2122 are connected to the positive electrode plate and the negative electrode plate respectively. The positive terminal post 2121 and the negative terminal post 2122 of the same battery cell 21 are distributed along the second direction.

The busbar device 3 is arranged on the top side of the battery cell 21, and the busbar device 3 is provided between two adjacent battery cells 21 in the corresponding battery unit 2. The busbar device 3 is electrically connected to the terminal posts 212 of the corresponding two adjacent battery cells 21, respectively. Specifically, the busbar device 3 is electrically connected to the positive terminal post 2121 of one of the battery cells 21, and is electrically connected to the negative terminal post 2122 of the other battery cell 21, thereby connecting the two adjacent battery cells 21 in series.

For the same battery cell 21, the busbar device 3 electrically connected to its positive terminal post 2121 and the busbar device 3 electrically connected to its negative terminal post 2122 are spaced apart along the second direction. In this way, the multiple busbar devices 3 corresponding to each battery unit 2 will be divided into two rows spaced apart along the second direction, and the circuit board 5 corresponding to the battery unit 2 is arranged in the space between the two rows of busbar devices 3, that is, the circuit board 5 is located on the top side of the battery cell 21 and on one side of the busbar device 3 along the second direction. The circuit board 5 is provided with a connector 51 to transmit the temperature data measured by the temperature measurement device 4 to the external control system.

The battery pack further includes a jumper device 6, which connects two adjacent battery units 2 in series. Specifically, the jumper device 6 is connected to the positive terminal post 2121 of a battery cell 21 at the end of one of the battery units 2 along the first direction, and is connected to the negative terminal post 2122 of a battery cell 21 at the end of the other one of the battery units 2 along the first direction, so as to connect the two battery units 2 in series.

Multiple temperature measurement devices 4 are arranged in the box 1. In this embodiment, the number of the temperature measurement devices 4 is less than the number of the battery cells 21, thereby reducing the cost of the battery pack.

The temperature measurement device includes at least one first temperature measurement device 41 and at least one second temperature measurement device 42. The first temperature measurement device 41 and the second temperature measurement device 42 both include a negative temperature coefficient thermistor. The first temperature measurement device 41 is in contact with the shell 211 of the corresponding battery cell 21, and the second temperature measurement device 42 is in contact with the terminal post 212 of the corresponding battery cell 21 and/or a device electrically connected to the terminal post 212. In this way, the temperature of the shell 211 of the battery cell 21 and the temperature of the charged part of the battery cell 21 can be measured at the same time. By means of these two temperatures, the operating status of the battery cell 21 can be determined more accurately, thereby improving the operation reliability and charging and discharging performance of the battery pack.

Specifically, the first temperature measurement device 41 is in contact with the shell 211 of the battery cell 21. The shell 211 of the battery cell 21 includes a metal case 2111 and an insulating film 2112, and the electrode assembly is located in the metal case 2111. The metal case 2111 includes a main casing 2111a and an end cover 2111b. The end cover 2111b covers the main casing 2111a. The electrode assembly is located in a space enclosed by the end cover 2111b and the main casing 2111a. The terminal post 212 is arranged on the end cover 2111b.

The insulating film 2112 is coated on an outer side of the metal case 2111. An avoidance opening 2112a is formed in the insulating film 2112. The metal case 2111 is partially exposed from the avoidance opening 2112a. The corresponding first temperature measurement device 41 is at least partially located in the avoidance opening 2112a to be in contact with the metal case 2111. Specifically, the avoidance opening 2112a is located on the side of the end cover 2111b away from the main casing 2111a, and the corresponding first temperature measurement device 41 is in contact with the end cover 2111b.

The battery pack includes a bracket 7 for the corresponding first temperature measurement device 41, the bracket 7 is located between the busbar device 3 and the battery cell 21, the busbar device 3 includes a busbar body 31, the busbar body 31 has an avoidance notch 31a, the bracket 7 has a hollow portion 7a, the hollow portion 7a is located in the avoidance notch 31a and in a projection plane perpendicular to the height direction, and the hollow portion 7a at least partially overlaps with the avoidance opening 2112a in the insulating film 2112. The corresponding first temperature measurement device 41 is fixedly connected to the bracket 7, and at least a part thereof is located in the hollow portion 7a, so that it can be in contact with the end cover 2111b of the battery cell 21 through the hollow portion 7a and the avoidance opening 2112a.

The second temperature measurement device 42 is in contact with the busbar device 3. The busbar device 3 further includes a busbar body 31 and a voltage sampler 32. The busbar body 31 is electrically connected to the terminal posts 212 of corresponding two adjacent battery cells 21 respectively. The voltage sampler 32 is electrically connected to the busbar body 31, and the corresponding second temperature measurement device 42 is in contact with the voltage sampler 32.

The voltage sampler 32 includes a first section in contact with the busbar body 31 and a second section in contact with the circuit board 5. The second temperature measurement device 42 is located in the second section of the voltage sampler 32. The voltage sampler 32 specifically includes a nickel sheet, the second temperature measurement device 42 is welded to the nickel sheet by ultrasonic welding, and a thermal conductive adhesive is applied at the welding point between the two.

Said avoidance notch 31a is arranged on one side of the busbar body 31 along the first direction, and the voltage sampler 32 is arranged on the other side of the busbar body 31 along the first direction. Said avoidance notch 31a is arranged on the side of the busbar body 31 close to the circuit board 5, and the voltage sampler 32 extends toward the circuit board 5 along the second direction. The first temperature measurement device 41, the second temperature measurement device 42, and the voltage sampler 32 are all electrically connected to the circuit board 5. This configuration can simplify the circuit structure within the battery pack, thereby facilitating assembly and saving space.

At least one second temperature measurement device 42 is provided in each of the end areas on opposite sides along the first direction and the middle area along the first direction in the box 1. The second temperature measurement devices 42 are distributed along a third direction, which is substantially the diagonal direction of the box 1, for example, the angle between the third direction and the diagonal direction of the box 1 is no more than 10°, 15°, or 20°.

Except for the battery cells 21 located at the ends of the battery unit 2 along the first direction (mainly given that a second temperature measurement device needs to be provided in the end area), among every two adjacent battery cells 21, one of the shell 211 and the terminal post 212 of one of the battery cells 21 and the busbar device 3 electrically connected to the terminal post 212 is selected to be in contact with the temperature measurement device, while none of the shell 211 and the terminal post 212 of the other one of the battery cells 21 and the busbar device 3 electrically connected to the terminal post 212 is in contact with the temperature measurement device.

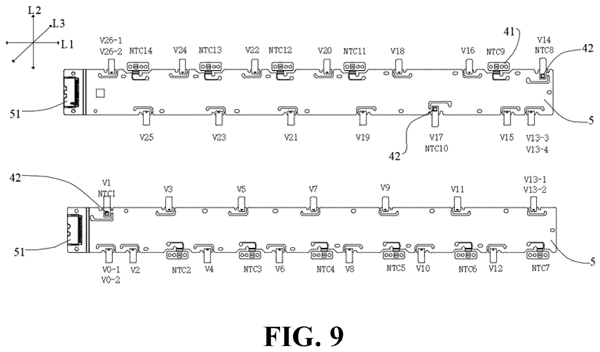

More specifically, referring to FIG. 9, in this embodiment, each battery unit 2 includes 13 battery cells 21, and the two battery units 2 are provided with a total of 26 battery cells 21, which are connected in series, and the above 26 battery cells are numbered 1 to 26 along the current flow direction, where the first temperature measurement devices 41 are in contact with the shells 211 of the battery cells 21 No. 3, No. 5, No. 7, No. 9, No. 11, No. 13, No. 15, No. 19, No. 21, No. 23, and No. 25, and the corresponding positions of the above 11 first temperature measurement devices 41 in FIG. 9 are NTC2, NTC3, NTC4, NTC5, NTC6, NTC7, NTC9, NTC11, NTC12, NTC13, and NTC14 respectively. The second temperature measurement devices 42 are in contact with the terminal posts 212 of the battery cells 21 No. 1, No. 14, and No. 17 and/or the busbar devices 3 electrically connected to the terminal posts 212. The corresponding positions of the above 3 second temperature measurement devices 42 in FIG. 9 are NTC1, NTC8, and NTC10 respectively.

In the description of the present disclosure, the description with reference to the terms such as "an embodiment," "some embodiments," "examples," "specific examples," "some examples," or the like means that specific features, structures, materials, or characteristics described in conjunction with the embodiment(s) or example(s) are included in at least one embodiment or example of the embodiments of the present disclosure. In the present disclosure, the illustrative expressions of the above-mentioned terms do not necessarily refer to the same embodiment or example. Moreover, the specific features, structures, materials, or characteristics described may be combined in any one or more embodiments or examples in a suitable manner. Furthermore, those skilled in the art may combine various embodiments or examples and features of various embodiments or examples described in the present disclosure provided they are not contradictory to each other.

The above description is merely made of preferred embodiments of the present disclosure, but is not intended to limit the present disclosure. It is apparent to those skilled in the art that various modifications and changes may be made to the present disclosure. Any modifications, equivalent replacements, and improvements made within the spirit and principle of the present disclosure shall be encompassed within the scope of protection of the present disclosure.

## Claims

1. A battery pack, comprising:
a box;
at least one battery unit located in the box, the battery unit comprising at least two battery cells, the at least two battery cells of the battery unit arranged in a first direction, the battery cells comprising a shell, an electrode assembly located in the shell, and a terminal post arranged on the shell, and the terminal post electrically connected to the electrode assembly;
a busbar device, the busbar device provided between every two adjacent ones of the battery cells of the battery unit, and the busbar device electrically connected to the terminal posts of the corresponding two adjacent battery cells respectively; and
a plurality of temperature measurement devices located in the box, a number of the temperature measurement devices being no less than 1/2 of the number of the battery cells and no more than 2/3 of the number of the battery cells.

2. The battery pack according to claim 1, wherein the temperature measurement device is in contact with the shell of the corresponding battery cell, or the temperature measurement device is in contact with at least one of the terminal post of the corresponding battery cell and the busbar device electrically connected to the terminal post.

3. The battery pack according to claim 2, wherein one of the shell and the terminal post of one battery cell of every two adjacent ones of the battery cells and the busbar device electrically connected to the terminal post is selected to be in contact with the temperature measurement device.

4. The battery pack according to any of claims 1 to 3, wherein the shell comprises:
a metal case, the electrode assembly located in the metal case, and the terminal post arranged on the metal case; and
an insulating film coated on an outer side of the metal case, an avoidance opening formed in the insulating film, the metal case partially exposed from the avoidance opening, and the corresponding temperature measurement device at least partially located in the avoidance opening to be in contact with the metal case.

5. The battery pack according to claim 4, wherein the metal case comprises:
a main casing; and
an end cover covering the main casing, the electrode assembly located in a space enclosed by the end cover and the main casing, the terminal post arranged on the end cover, the insulating film arranged across the main casing and the end cover, the avoidance opening located on the side of the end cover away from the main casing, and the corresponding temperature measurement device in contact with the end cover.

6. The battery pack according to any of claims 1 to 5, wherein the busbar device comprises:
a busbar body electrically connected to the terminal posts of the corresponding two adjacent battery cells respectively; and
a voltage sampler electrically connected to the busbar body, the corresponding temperature measurement device in contact with the voltage sampler.

7. The battery pack according to claim 6, wherein the busbar body has an avoidance notch on one side along the first direction, the voltage sampler is connected to the other side of the busbar body along the first direction, and the corresponding temperature measurement device is at least partially located in the avoidance notch to be arranged in contact with the shell of the corresponding battery cell.

8. The battery pack according to claim 7, wherein the battery pack comprises at least one circuit board corresponding to the at least one battery unit, and the circuit board extends along the first direction and is arranged on one side of the busbar device along a second direction, the second direction intersecting the first direction; and
the avoidance notch is located on the side of the busbar body close to the circuit board, and the temperature measurement device and the voltage sampler are both electrically connected to the circuit board.

9. The battery pack according to any of claims 1 to 8, wherein at least one of the temperature measurement devices is a first temperature measurement device in contact with the shell of the corresponding battery cell, and at least one of the temperature measurement devices is a second temperature measurement device in contact with at least one of the terminal post of the corresponding battery cell and the busbar device electrically connected to the terminal post.

10. The battery pack according to any of claims 1 to 9, wherein the busbar device connects the corresponding two adjacent battery cells in series; and/or
the battery pack comprises at least two battery units and a jumper device, the jumper device provided between every two adjacent ones of the battery units, and the jumper device connecting the corresponding two adjacent battery units in series.

11. An electrical apparatus comprising the battery pack according to any of claims 1 to 10.
